# EUROPÄISCHE PATENTSCHRIFT

(11) **EP 2 891 838 B1**
(45) Veröffentlichungstag und Bekanntmachung des Hinweises auf die Patenterteilung: **21.02.2018**
(21) Anmeldenummer: 14195900.7
(22) Anmeldetag: 02.12.2014
(51) Int. Cl.: F16L 55/035, F16L 3/13, F16L 3/223, F16L 3/237

(54) **Befestigungsvorrichtung**
Attachment device
Dispositif de fixation

(30) Priorität: 07.01.2014 DE 102014100073
(43) Veröffentlichungstag der Anmeldung: 08.07.2015
(73) Patentinhaber: Illinois Tool Works Inc., Glenview, IL 60025 (US)
(72) Erfinder: Fiebich, Waldemar, 67659 Erlenbach (DE); Claßen, Roland, 52159 Roetgen (DE)
(74) Vertreter: Hauck Patentanwaltspartnerschaft mbB

(56) Entgegenhaltungen:
- EP-A2- 1 450 089
- DE-A1-102009 005 421
- DE-U1-202008 007 632
- US-A1- 2007 284 485

## Beschreibung

Die Erfindung betrifft eine Befestigungsvorrichtung für zumindest eine Leitung.

Zur Befestigung von Leitungen, beispielsweise Hydraulikleitungen oder Bremsleitungen, in Fahrzeugen, insbesondere an der Fahrzeugkarosserie, sind unterschiedliche Befestigungsvorrichtungen aus dem Stand der Technik bekannt. An solche Befestigungsvorrichtungen werden zunehmend höhere Anforderungen gestellt. Die Befestigungsvorrichtungen sollen einen sicheren Halt der Leitung im Fahrzeug gewährleisten sowie die Leitung vor den im Fahrzeug auftretenden Erschütterungen und Vibrationen schützen. Des Weiteren sollen die Befestigungsvorrichtungen aber einfach und schnell zu montieren sein sowie geringe Herstellungskosten aufweisen.

In der DE 10 2009 005 421 A1 ist eine Befestigungsvorrichtung für Leitungen im Autmobilbau gezeigt, die elastische Elemente aufweist mit denen Befestigungselemente an einem Grundkörper mechanisch gedämpft angeordnet sind.

Aus der EP 1 450 089 A2 ist eine Befestigungsvorrichtung aus Kunststoff bekannt. Diese umfasst einen Grundkörper mit einem Befestigungsabschnitt, an dem elastische Stützelemente angebracht sind, und einen Halteabschnitt, der wenigstens eine Leitung aufnehmen kann.

In der US 2007/0284485 A1 ist eine Befestigungsvorrichtung gezeigt, die einen Halteabschnitt aufweist, der über ein Dämpfungselement mit dem Befestigungsabschnitt gekoppelt ist.

Aus der DE 20 2008 007 632 U1 ist eine Befestigungsvorrichtung bekannt, bei der die Aufnahmeabschnitte elastische Elemente aufweisen, welche in radialer Richtung verformbar sind und von ihnen gehaltene Leitungen gedämpft lagern.

Aufgabe der Erfindung ist es, eine Befestigungsvorrichtung für zumindest eine Leitung bereitzustellen, die einen zuverlässigen Halt sowie eine verbesserte Entkoppelung der in der Befestigungsvorrichtung gehaltenen Leitung von einer Fahrzeugkarosserie ermöglicht. Zudem sind eine einfache Montage und Herstellung der Befestigungsvorrichtung erwünscht.

Zur Lösung der Aufgabe ist eine Befestigungsvorrichtung für zumindest eine Leitung vorgesehen, mit einem Halteabschnitt zur Montage der Befestigungsvorrichtung, wobei der Halteabschnitt eine Aufnahmebohrung zur Aufnahme eines fahrzeugfesten Bolzens aufweist, zumindest einem Aufnahmeabschnitt, der eine Aufnahme für zumindest eine Leitung aufweist, wobei zwischen dem Halteabschnitt und dem zumindest einen Aufnahmeabschnitt zumindest ein Dämpfungsabschnitt vorgesehen ist, der den zumindest einen Aufnahmeabschnitt mit dem Halteabschnitt verbindet und vom Halteabschnitt schwingungstechnisch entkoppelt, wobei die Verbindung zwischen Aufnahmeabschnitt und Halteabschnitt ausschließlich durch den Dämpfungsabschnitt gebildet ist, wobei der Halteabschnitt aus einem ersten, harten Material und der Dämpfungsabschnitt aus einem zweiten, weichen Material besteht, wobei der Aufnahmeabschnitt zumindest ein in die Aufnahme ragendes Dämpfungselement aufweist, wobei am Aufnahmeabschnitt außenseitig zumindest ein Dämpfungsbauteil vorgesehen ist und wobei das Dämpfungselement und der Dämpfungsabschnitt einstückig miteinander verbunden sind.

Die Erfindung beruht auf dem Grundgedanken, die Aufnahmeabschnitte, welche die Leitung(en) aufnehmen, schwingungstechnisch vom Halteabschnitt dadurch so weit wie möglich zu entkoppeln, dass zwischen Halteabschnitt und Aufnahmeabschnitt keine direkte Verbindung aus ihrem Material besteht. Stattdessen wird ein separates Bauteil, nämlich der Dämpfungsabschnitt, dazu verwendet, die beiden Bauteile Halteabschnitt und Aufnahmeabschnitt miteinander zu verbinden. Das weiche Material des Dämpfungsabschnitts kann Schwingungen oder Erschütterungen, die von der Fahrzeugkarosserie auf den Halteabschnitt übertragen werden, wirkungsvoll dämpfen, sodass diese vom Aufnahmeabschnitt ferngehalten werden. Außer diesem Dämpfungsabschnitt besteht keine weitere Verbindung zwischen dem Halteabschnitt und dem Aufnahmeabschnitt, über die eine Übertragung von Schwingungen auf den Aufnahmeabschnitt möglich wäre. Somit ist eine wirkungsvolle Entkoppelung des Aufnahmeabschnitts von der Fahrzeugkarosserie möglich, sodass die Belastungen durch Schwingungen oder Stöße auf die Leitung effektiv reduziert werden können. Da die Leitung nicht am harten Stützelement anliegt, sondern an einem weicheren Dämpfungselement, das vom Stützelement gewissermaßen außenseitig gestützt wird, ergibt sich zusätzlich zum Dämpfungsabschnitt eine weitere Entkoppelung bzw. Dämpfungsmöglichkeit für die Leitung, sodass auch, falls Schwingungen auf das Stützelement übertragen werden sollten, diese nicht auf die Leitung einwirken. Der Aufnahmeabschnitt liegt beispielsweise mit diesem Dämpfungsbauteil an der Fahrzeugkarosserie oder einem anderen Bauteil an, wodurch eine zusätzliche Stützfunktion für den Aufnahmeabschnitt bereitgestellt ist. Da das Dämpfungsbauteil vorzugsweise aus dem zweiten, weichen Material hergestellt ist und somit flexibel nachgeben kann, erfolgt auch bei einer solchen Stützfunktion eine schwingungstechnische Entkoppelung des Aufnahmeabschnitts von der Fahrzeugkarosserie. Es ist auch denkbar, dass dieses Dämpfungsbauteil im Einbauzustand nicht konstant an der Fahrzeugkarosserie anliegt, aber Stöße, die auf die Befestigungsvorrichtung, insbesondere auf den Aufnahmeabschnitt wirken können, abfedern kann.

Der Aufnahmeabschnitt kann beispielsweise zumindest ein Stützelement aufweisen, das die Aufnahme zumindest teilweise umschließt, wobei das Stützelement insbesondere aus einem harten Material, insbesondere aus dem ersten, harten Material hergestellt ist. Dadurch ist ein zuverlässiger Halt der Leitung im Aufnahmeabschnitt bzw. in der Aufnahme sichergestellt, da durch das Stützelement der Aufnahmeabschnitt stabiler ist und somit die Leitung besser fixieren kann.

Das Dämpfungselement deckt das Stützelement zur Aufnahme hin zumindest teilweise abdeckt. Dies verbessert die Entkopplung.

Das Dämpfungselement kann beispielsweise zumindest eine sich radial nach innen erstreckende Dämpfungsrippe aufweisen, die federnd nachgeben kann. Die Leitung kann an diesen Dämpfungsrippen anliegen und begrenzt in der Aufnahme bewegt werden, um Bewegungen des Aufnahmeabschnitts zu dämpfen bzw. abzufedern.

Das Dämpfungselement, der Dämpfungsabschnitt und/oder das Dämpfungsbauteil können jeweils durch separate Bauteile gebildet sein, so dass eine beliebige Anordnung am Aufnahmeabschnitt bzw. am Halteabschnitt möglich ist. Um die Herstellung der Befestigungsvorrichtung zu vereinfachen und um dessen Stabilität zu erhöhen, sind das Dämpfungselement, der Dämpfungsabschnitt und/oder das Dämpfungsbauteil aber einstückig miteinander verbunden. Diese bilden somit ein gemeinsames Bauteil, das am Halteabschnitt befestigt ist und in dem zumindest teilweise die Aufnahme für die Leitung vorgesehen ist. Da dieses Bauteil aus einem weichen Kunststoff hergestellt ist, kann keine Übertragung von Schwingungen zwischen Dämpfungselement, Dämpfungsabschnitt und/oder Dämpfungsbauteil erfolgen, so dass die Leitung zuverlässig vom Halteabschnitt bzw. von der Fahrzeugkarosserie entkoppelt ist.

Die Befestigungsvorrichtung ist vorzugsweise in einem Zweikomponenten-Spritzgussverfahren hergestellt. In einem ersten Herstellungsschritt werden aus dem ersten, harten Material der Halteabschnitt und das Stützelement und somit auch Teile des Aufnahmeabschnitts hergestellt. Anschließend wird das zweite, weiche Material angespritzt, das den übrigens Teil des Aufnahmeabschnitt, den Dämpfungsabschnitt sowie gegebenenfalls das Dämpfungsbauteil und das zumindest eine Dämpfungselement bildet, und den Aufnahmeabschnitt mit dem Halteabschnitt verbindet.

Am Stützelement sowie am Halteabschnitt können Aussparungen oder Hinterschnitte vorgesehen sein, in die das zweite, weiche Material eindringt, sodass eine stabile Verbindung der beiden Materialien gewährleistet ist.

Weitere Vorteile und Merkmale ergeben sich aus der nachfolgenden Beschreibung in Verbindung mit den beigefügten Zeichnungen. In diesen zeigen:
- Figuren 1a bis 1c eine perspektivische Ansicht, eine Frontansicht sowie eine Schnittansicht einer erfindungsgemäßen Befestigungsvorrichtung, wobei die Schnittebene durch die Mitte der Befestigungsvorrichtung und parallel zur Zeichenebene der Darstellung von Figur 1b verläuft,
- Figuren 2a bis 2c eine perspektivische Ansicht, eine Frontansicht sowie eine Schnittansicht des Halteabschnitt sowie der Stützelemente der Befestigungsvorrichtungen aus den Figuren 1a bis 1c,
- Figuren 3a bis 3c eine perspektivische Ansicht, eine Frontansicht sowie eine Schnittansicht der Dämpfungselemente, der Dämpfungsabschnitte sowie der Dämpfungsbauteile der Befestigungsvorrichtung aus den Figuren 1a bis 1c,
- Figur 4 eine Frontansicht durch eine zweite Ausführungsform einer erfindungsgemäßen Befestigungsvorrichtung,
- Figur 5 eine Frontansicht einer dritten Ausführungsform einer erfindungsgemäßen Befestigungsvorrichtung, und
- Figur 6 eine Frontansicht einer vierten Ausführungsform einer erfindungsgemäßen Befestigungsvorrichtung.

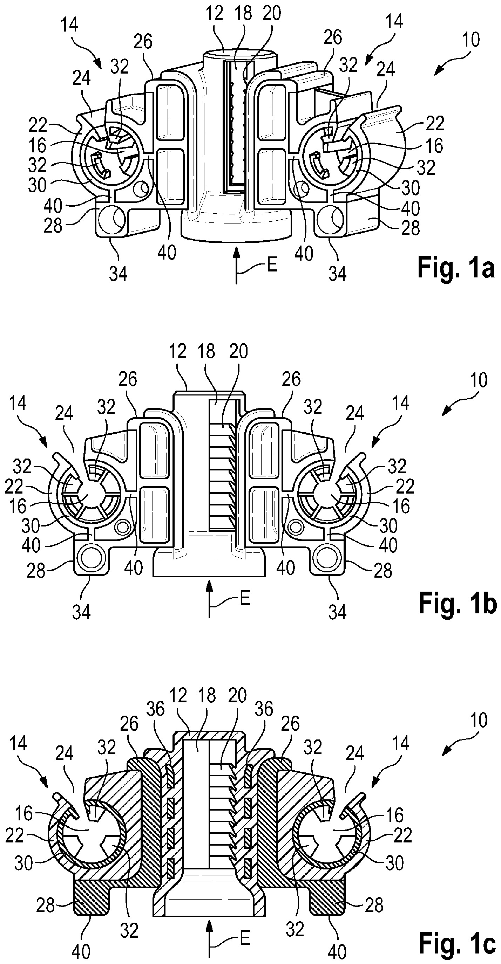

In den Figuren 1a bis 1c ist eine Befestigungsvorrichtung 10 für eine Leitung, beispielsweise eine Hydraulikleitung oder eine Bremsleitung in einem Fahrzeug, gezeigt. Die Befestigungsvorrichtung 10 hat einen Halteabschnitt 12 sowie zwei an gegenüberliegenden Seiten des Halteabschnitts 12 angeordnete Aufnahmeabschnitte 14, die jeweils eine im Wesentlichen zylindrische Aufnahme für jeweils eine Leitung aufweisen.

Mit dem Halteabschnitt 12 kann die Befestigungsvorrichtung 10 beispielsweise an einer Fahrzeugkarosserie befestigt werden. Der Halteabschnitt 12 hat dazu eine Aufnahmebohrung 18, in die ein fahrzeugfester Bolzen in einer Einschubrichtung E eingeschoben werden kann. Alternativ kann der Halteabschnitt 12 auf einen fahrzeugfest angebrachten Bolzen aufgeschoben werden.

An der Innenseite der Aufnahmebohrung 18 ist eine Haltestruktur 20, beispielsweise eine Verrastung oder ein Gewinde vorgesehen, um die Befestigungsvorrichtung 10 am fahrzeugfesten Bolzen zu verankern. Um einen zuverlässigen Halt sicherzustellen und die Stabilität der Befestigungsvorrichtung 10 zu gewährleisten, besteht der Halteabschnitt 12 aus einem ersten, harten Material, vorzugsweise aus einem Kunststoff.

Die Aufnahmeabschnitte 14 sind an in Umfangsrichtung gegenüberliegenden Seiten des Halteabschnitts 12 angeordnet, wobei in der gezeigten Ausführungsform beide Aufnahmen 16 die gleiche Ausrichtung haben. Die eingelegten Leitungen werden also im Bereich der Aufnahmen 16 parallel zueinander gehalten. Unabhängig davon können die Aufnahmeabschnitte 14 und die Aufnahmen beliebig relativ zum Halteabschnitt angeordnet werden und insbesondere verschiedene Ausrichtungen aufweisen.

Die Aufnahmeabschnitte 14 weisen jeweils ein Stützelement 22 auf, das ebenfalls aus einem harten Material, vorzugsweise dem gleichen Material wie der Halteabschnitt 12, hergestellt ist. Das Stützelement 22 ist im Wesentlichen zylindrisch ausgebildet und weist einen Einschubspalt 24 auf, der in Längsrichtung der Aufnahme 16 angeordnet ist. Das Stützelement 22 umschließt jeweils die Aufnahme 16 in Umfangsrichtung bis auf den Einschubspalt 24 vollständig. Über diesen Einschubspalt 24 kann eine Leitung in die Aufnahme 16 eingelegt werden. Dazu kann das Stützelement 22 elastisch aufgebogen werden, sodass der Einschubspalt 24 verbreitert wird.

Zwischen den Aufnahmeabschnitten 14 und dem Halteabschnitt 12 ist jeweils ein Dämpfungsabschnitt 26 aus einem zweiten, weichen Material vorgesehen, vorzugsweise einem weichen Kunststoff, das elastisch nachgeben kann.

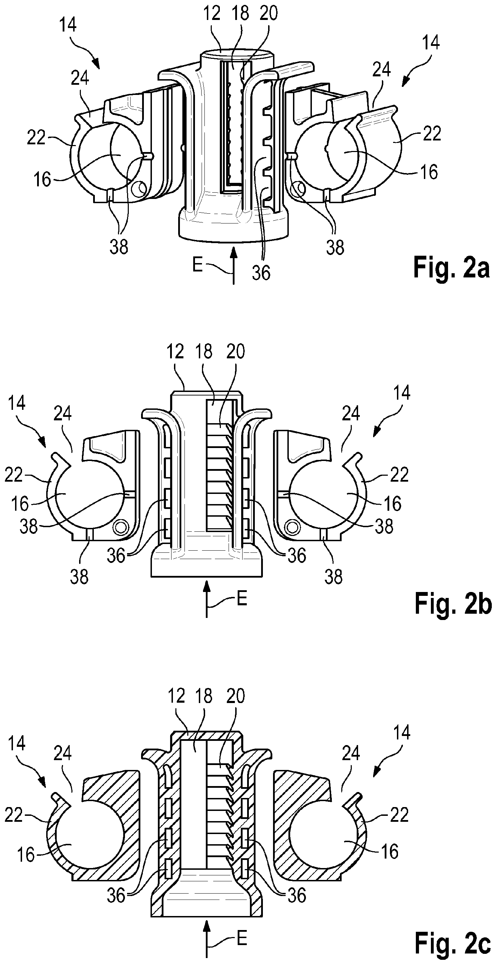

Der Dämpfungsabschnitt 26 verbindet, wie insbesondere in den Figuren 1a bis 1c zu sehen, den Aufnahmeabschnitt 14 jeweils mit dem Halteabschnitt 12. Wie insbesondere in den Figuren 2a bis 2c zu sehen ist, besteht zwischen den harten Stützelementen 22 und dem Halteabschnitt 12 keine direkte Verbindung. Diese erfolgt ausschließlich über den Dämpfungsabschnitt 26 aus dem zweiten, weichen Material. Dieses weiche Material kann Schwingungen oder Stöße, die über den Halteabschnitt 12 von der Fahrzeugkarosserie auf die Befestigungsvorrichtung 10 einwirken, wirkungsvoll dämpfen, sodass diese nicht oder nur stark reduziert an die Aufnahmeabschnitte 14 weitergegeben werden. Da außer den weichen Dämpfungsabschnitten 26 keine weitere Verbindung zwischen den Aufnahmeabschnitten 14 und dem Halteabschnitt 12 besteht, erfolgt so eine effektive schwingungstechnische Entkoppelung der Aufnahmeabschnitte 14 vom Halteabschnitt 12.

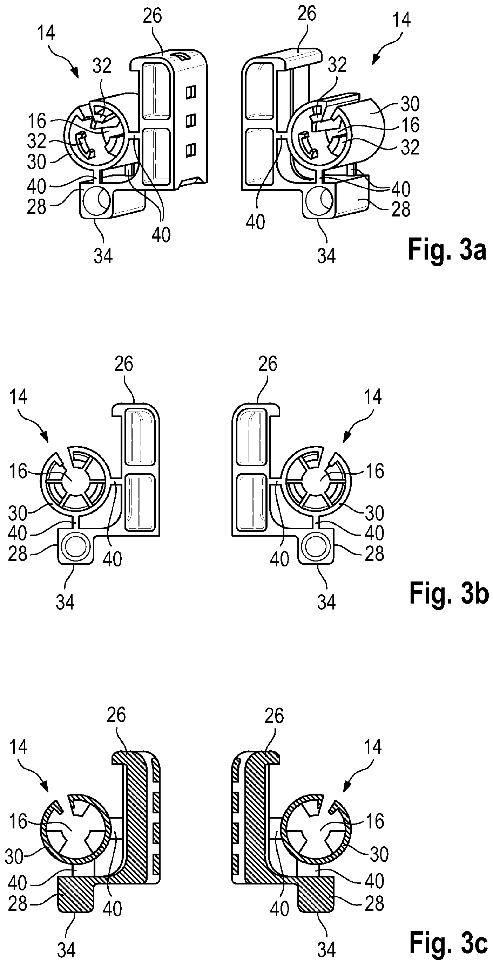

Des Weiteren sind jedem Aufnahmeabschnitt 14 ein Dämpfungsbauteil 28 sowie ein Dämpfungselement 30 zugeordnet, die, wie nachfolgend erläutert wird, einstückig mit dem Dämpfungsabschnitt aus dem zweiten, weichen Material hergestellt sind (siehe insbesondere Figuren 3a bis 3c).

Die Dämpfungsbauteile 28 sind jeweils außenseitig an den Aufnahmeabschnitten 14 bzw. den Stützelementen 22 vorgesehen, wobei jeder Aufnahme ein Dämpfungsbauteile 28 zugeordnet ist. In der hier gezeigten Ausführungsform befinden sich die Öffnung der Aufnahmebohrung 18 sowie die Anlageflächen 34 der Dämpfungsbauteile 28 in einer Ebene, sodass die Dämpfungsbauteile 28 bei montierter Befestigungsvorrichtung 10 an der Oberfläche der Fahrzeugkarosserie anliegen.

Die Aufnahmeabschnitte 14 werden so durch die Dämpfungsbauteile 28 zusätzlich gestützt und stabilisiert. Da die Dämpfungsbauteile 28 aus dem zweiten, weichen Material hergestellt sind, können über diese keine Stöße oder Vibrationen an die Aufnahmeabschnitte 14 weitergeleitet werden.

Abhängig von der Position und der Form der Dämpfungsbauteile 28 ist es aber auch möglich, dass diese nicht permanent an der Fahrzeugkarosserie anliegen, sondern nur bei größeren Erschütterungen oder Schlägen verhindern, dass die Aufnahmeabschnitte 14 an der Fahrzeugkarosserie anschlagen.

Die Dämpfungselemente 30 decken jeweils das Stützelement 22 innenseitig ab, wobei der Einschubspalt 24 freigehalten ist. Zusätzlich weist das Dämpfungselement 30 sich radial nach innen erstreckende Dämpfungsrippen 32 auf, die elastisch nachgeben können, sodass die Aufnahme 16 an den Durchmesser der Leitung angepasst werden kann. Eine in die Aufnahme 16 eingelegte Leitung liegt also nicht am Stützelement 22, sondern nur am Dämpfungselement 30 an. Durch dieses Dämpfungselement 30, insbesondere durch die Dämpfungsrippen 32, die aus dem zweiten, weichen Material bestehen, erfolgt des Weiteren eine weitere Entkoppelung der in die Aufnahme 16 eingelegten Leitung vom Stützelement 22.

Durch die Dämpfungsabschnitte 26, die Dämpfungsbauteile 28 sowie die Dämpfungselemente 30 sind die Aufnahmeabschnitte 14 bzw. die Stützelemente 22 somit sicher gehalten, aber vollständig vom Halteabschnitt 12 und der Fahrzeugkarosserie entkoppelt, sodass Schwingungen, die auf den Halteabschnitt bzw. die Fahrzeugkarosserie wirken, zuverlässig gedämpft werden können.

Die erfindungsgemäße Befestigungsvorrichtung 10 wird vorzugsweise in einem Zweikomponenten-Spritzgussverfahren hergestellt, wodurch eine schnelle Herstellung sichergestellt ist und die einzelnen Abschnitte zuverlässig miteinander verbunden sind.

In einem ersten Herstellungsschritt werden die Bauteile aus dem ersten, harten Material, also der Halteabschnitt 12 sowie die Stützelemente 22, hergestellt.

Anschließend wird die Spritzgussform mit dem zweiten, weichen Material gefüllt, wodurch der Dämpfungsabschnitt 26, die Dämpfungsbauteile 28 sowie die Dämpfungselemente 30 gebildet werden.

Wie in den Figuren 2a bis 2c zu sehen ist, sind am Halteabschnitt sowie an den Stützelementen 22 Aussparungen 36 und Strukturen 38 vorgesehen, in die bei diesem Herstellungsschritt das zweite, weiche Material fließen kann. Dies sorgt auch für eine gute mechanische Verbindung zwischen den beiden Materialien.

Wie in den Figuren 3a bis 3c zu sehen ist, sind die Dämpfungsabschnitte 26, die Dämpfungsbauteile 28 sowie die Dämpfungselemente 30 über Stege 40 miteinander verbunden, also einstückig miteinander verbunden. Dadurch ist in Verbindung mit den Strukturen 38 und Aussparungen 36, in die sich das zweite, weiche Material erstreckt, eine zuverlässige Verbindung aller Bauteile der Befestigungsvorrichtung 10 sichergestellt.

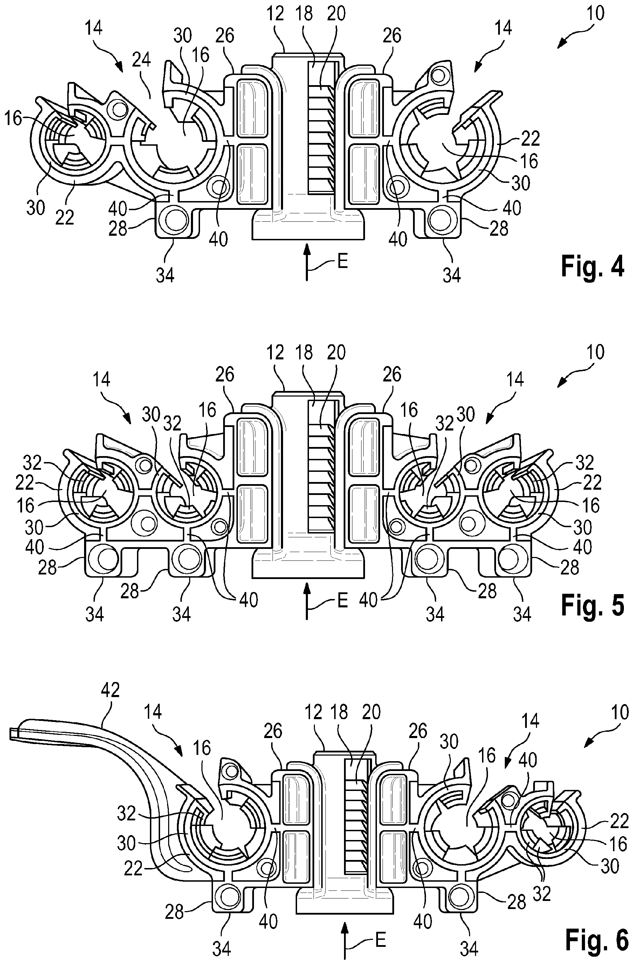

Weitere Ausführungsformen für erfindungsgemäße Befestigungsvorrichtungen 10 sind in den Figuren 4 bis 6 dargestellt.

Die in Figur 4 gezeigte Ausführungsform entspricht im Wesentlichen der in den Figuren 1a bis 1c dargestellten Ausführungsform. Sie unterscheidet sich lediglich darin, dass an einem Aufnahmeabschnitt 14 zwei Aufnahmen 16 für jeweils eine Leitung vorgesehen sind. Dieser Aufnahmeabschnitt 14 weist zudem ein gemeinsames Stützelement 22 für beide Aufnahmen 16 auf. Es ist aber auch denkbar, dass zwei separate Stützelemente 22 verwendet werden, die durch einen weiteren Abschnitt aus dem zweiten, weichen Material verbunden sind.

Jede Aufnahme 16 weist des Weiteren ein Dämpfungselement 30 mit Dämpfungsrippen 32 auf. Jedem Aufnahmeabschnitt 14 ist nur ein Dämpfungsbauteil 28 zugeordnet.

Die einen Aufnahmeabschnitt 14 zugeordneten Dämpfungsabschnitte 26, Dämpfungsbauteile 28 sowie Dämpfungselemente 30 sind auch in dieser Ausführungsform einstückig miteinander verbunden, wobei die Aufnahmeabschnitte 14 durch die jeweiligen Dämpfungsabschnitt 26 vollständig vom Halteabschnitt 12 entkoppelt sind.

In Figur 5 weist jeder Aufnahmeabschnitt 14 zwei Aufnahmen 16 auf, wobei der Aufbau der Aufnahmeabschnitte 14 jeweils dem Aufnahmeabschnitt aus Figur 4 entspricht, der zwei Aufnahmen 16 aufweist.

Des Weiteren ist in dieser Ausführungsform jeder Aufnahme 16 ein separates Dämpfungsbauteil 28 zugeordnet.

Die in Figur 6 dargestellte Ausführungsform entspricht im Wesentlichen der in Figur 4 gezeigten Befestigungsvorrichtung 10, wobei an einem Stützelement zusätzlich ein Hebel 42 vorgesehen ist, mit dem ein einfacheres Aufbiegen des Stützelements 22 zur leichteren Entnahme der Leitung aus der Aufnahme 16 möglich ist.

In allen gezeigten Ausführungsformen bestehen die Aufnahmeabschnitte sowohl aus dem weichen Material wie auch aus dem harten Material. Die Aufnahme ist durch eine Kombination des Stützelements 22 mit dem Dämpfungselement 30 gebildet.

Da durch den Dämpfungsabschnitt 26 aber bereits eine vollständige schwingungstechnische Entkoppelung des Aufnahmeabschnitts erfolgt, ist es auch möglich, dass der Aufnahmeabschnitt 14 nur aus dem ersten, harten Material besteht. Alternativ ist es auch denkbar, falls das weiche Material eine ausreichende Stabilität besitzt, auf ein Stützelement 22 zu verzichten. Insbesondere kann der Aufnahmeabschnitt 14 auch aus einem dritten Material bestehen, das beispielsweise weicher ist als das erste Material, aber härter als das zweite. Die Dämpfungsbauteile 28 können von den Dämpfungsabschnitten 26 sowie den Dämpfungselementen 30 separat hergestellt werden bzw. keine Verbindung miteinander haben.

## Patentansprüche

1. Befestigungsvorrichtung (10) für zumindest eine Leitung, mit einem Halteabschnitt (12) zur Montage der Befestigungsvorrichtung (10), wobei der Halteabschnitt (12) eine Aufnahmebohrung (18) zur Aufnahme eines fahrzeugfesten Bolzens aufweist, zumindest einem Aufnahmeabschnitt (14), der eine Aufnahme (16) für zumindest eine Leitung aufweist, wobei zwischen dem Halteabschnitt (12) und dem zumindest einen Aufnahmeabschnitt (14) zumindest ein Dämpfungsabschnitt (26) vorgesehen ist, der den zumindest einen Aufnahmeabschnitt (14) mit dem Halteabschnitt (12) verbindet und vom Halteabschnitt (12) schwingungstechnisch entkoppelt, wobei die Verbindung zwischen Aufnahmeabschnitt (14) und Halteabschnitt (12) ausschließlich durch den Dämpfungsabschnitt (26) gebildet ist, wobei der Halteabschnitt (12) aus einem ersten, harten Material und der Dämpfungsabschnitt (26) aus einem zweiten, weichen Material besteht,
**dadurch gekennzeichnet, dass**
der Aufnahmeabschnitt (14) zumindest ein in die Aufnahme (16) ragendes Dämpfungselement (30) aufweist, wobei am Aufnahmeabschnitt (14) außenseitig zumindest ein Dämpfungsbauteil (28) vorgesehen ist und wobei das Dämpfungselement (30) und der Dämpfungsabschnitt (26) einstückig miteinander verbunden sind.

2. Befestigungsvorrichtung nach Anspruch 1, **dadurch gekennzeichnet, dass** der zumindest eine Aufnahmeabschnitt (14) zumindest ein Stützelement (22) aufweist, das die Aufnahme (16) zumindest teilweise umschließt, wobei das Stützelement (22) insbesondere aus einem harten Material, insbesondere aus dem ersten, harten Material besteht.

3. Befestigungsvorrichtung nach einem der vorhergehenden Ansprüche, **dadurch gekennzeichnet, dass** das Dämpfungselement (30) das Stützelement (22) zur Aufnahme (16) hin zumindest teilweise abdeckt.

4. Befestigungsvorrichtung nach Anspruch 3, **dadurch gekennzeichnet, dass** das Dämpfungselement (30) zumindest eine sich radial nach innen erstreckende Dämpfungsrippe (32) aufweist.

5. Befestigungsvorrichtung nach einem der vorhergehenden Ansprüche, **dadurch gekennzeichnet, dass** das Dämpfungsbauteil (28) einstückig mit dem Dämpfungselement (30) und dem Dämpfungsabschnitt (26) verbunden ist.

6. Befestigungsvorrichtung nach einem der vorhergehenden Ansprüche, **dadurch gekennzeichnet, dass** die Befestigungsvorrichtung (10) in einem Zweikomponenten-Spritzgussverfahren hergestellt ist.

7. Befestigungsvorrichtung nach einem der vorhergehenden Ansprüche, **dadurch gekennzeichnet, dass** am Halteabschnitt (12) und/oder am Stützelement (22) Aussparungen (36) und/oder Strukturen (38) vorgesehen sind, in die sich das Material des Dämpfungselements (30), des Dämpfungsabschnitts (26) und/oder des Dämpfungsbauteils (28) erstreckt.

## Claims

1. Device (10) for fastening at least one line, having a retaining portion (12) for installing the fastening device (10), wherein the retaining portion (12) has an accommodating bore (18) for accommodating a vehicle-mounted bolt, and having at least one accommodating portion (14), which has a holder (16) for at least one line, wherein the retaining portion (12) and the at least one accommodating portion (14) have provided between them at least one damping portion (26), which connects the at least one accommodating portion (14) to the retaining portion (12) and decouples the same in terms of vibration from the retaining portion (12), wherein the connection between the accommodating portion (14) and retaining portion (12) is formed exclusively by the damping portion (26), wherein the retaining portion (12) consists of a first, hard material and the damping portion (26) consists of a second, soft material,
**characterized in that**
the accommodating portion (14) has at least one damping element (30), which projects into the holder (16), wherein at least one damping component (28) is provided on the outside of the accommodating portion (14), and wherein the damping element (30) and the damping portion (26) are connected in one piece to one another.

2. Fastening device according to Claim 1,
**characterized in that** the at least one accommodating portion (14) has at least one supporting element (22), which at least partially encloses the holder (16), wherein the supporting element (22) consists in particular of a hard material, in particular of the first, hard material.

3. Fastening device according to either of the preceding claims, **characterized in that** the damping element (30) at least partially covers the supporting element (22) in the direction of the holder (16).

4. Fastening device according to Claim 3,
**characterized in that** the damping element (30) has at least one radially inwardly extending damping rib (32).

5. Fastening device according to one of the preceding claims, **characterized in that** the damping component (28) is connected in one piece to the damping element (30) and to the damping portion (26).

6. Fastening device according to one of the preceding claims, **characterized in that** the fastening device (10) is produced by two-component injection moulding.

7. Fastening device according to one of the preceding claims, **characterized by** the provision, on the retaining portion (12) and/or on the supporting element (22), of apertures (36) and/or structures (38), into which extends the material of the damping element (30), of the damping portion (26) and/or of the damping component (28).

## Revendications

1. Dispositif de fixation (10) pour au moins une conduite, comprenant une portion de retenue (12) pour le montage du dispositif de fixation (10), la portion de retenue (12) présentant un alésage de réception (18) pour recevoir un boulon fixé au véhicule, au moins une portion de réception (14) qui présente un logement (16) pour au moins une conduite, au moins une portion d'amortissement (26) étant prévue entre la portion de retenue (12) et l'au moins une portion de réception (14), laquelle relie l'au moins une portion de réception (14) à la portion de retenue (12) et la désaccouple de la portion de retenue (12) par une technique d'oscillation, la liaison entre la portion de réception (14) et la portion de retenue (12) étant exclusivement formée par la portion d'amortissement (26), la portion de retenue (12) se composant d'un premier matériau dur et la portion d'amortissement (26) se composant d'un deuxième matériau souple,
**caractérisé en ce que**
la portion de réception (14) présente au moins un élément d'amortissement (30) pénétrant dans le logement (16), au moins un composant d'amortissement (28) étant prévu sur la portion de réception (14) du côté extérieur et l'élément d'amortissement (30) et la portion d'amortissement (26) étant reliés l'un à l'autre d'une seule pièce.

2. Dispositif de fixation selon la revendication 1,
**caractérisé en ce que** l'au moins une portion de réception (14) présente au moins un élément de support (22) qui entoure au moins en partie le logement (16), l'élément de support (22) se composant notamment d'un matériau dur, en particulier du premier matériau dur.

3. Dispositif de fixation selon l'une quelconque des revendications précédentes, **caractérisé en ce que** l'élément d'amortissement (30) recouvre au moins en partie l'élément de support (22) vers le logement (16).

4. Dispositif de fixation selon la revendication 3,
**caractérisé en ce que** l'élément d'amortissement (30) présente au moins une nervure d'amortissement (32) s'étendant radialement vers l'intérieur.

5. Dispositif de fixation selon l'une quelconque des revendications précédentes, **caractérisé en ce que** le composant d'amortissement (28) est connecté d'une seule pièce à l'élément d'amortissement (30) et à la portion d'amortissement (26).

6. Dispositif de fixation selon l'une quelconque des revendications précédentes, **caractérisé en ce que** le dispositif de fixation (10) est fabriqué par un procédé de moulage par injection à deux composants.

7. Dispositif de fixation selon l'une quelconque des revendications précédentes, **caractérisé en ce que** des évidements (36) et/ou des structures (38) sont prévus sur la portion de retenue (12) et/ou sur l'élément de support (22), dans lesquels s'étend le matériau de l'élément d'amortissement (30), de la portion d'amortissement (26) et/ou du composant d'amortissement (28).
